# EUROPEAN PATENT APPLICATION

(11) **EP 2 687 997 A1**
(43) Date of publication of application: **22.01.2014**
(21) Application number: 12757856.5
(22) Date of filing: 13.03.2012
(51) Int. Cl.: G06F 17/30

(54) **METHOD FOR REARRANGING WEB PAGE**

(30) Priority: 14.03.2011 CN 201110060342
(71) Applicant: Xiaomi Inc., Beijing 100085 (CN)
(72) Inventor: WANG, Xuanran, Beijing 100085 (CN); FAN, Dian, Beijing 100085 (CN); QU, Heng, Beijing 100085 (CN); HONG, Feng, Beijing 100085 (CN); HUANG, Jiangji, Beijing 100085 (CN)
(74) Representative: Spachmann, Holger
(86) International application number: PCT/CN2012/072285
(87) International publication number: WO 2012/122934

(57) **Abstract**

The present invention discloses a method for redoing a webpage layout, in which a mobile browser obtains a web address, and judges if the webpages corresponding to said web address meet identification rules, otherwise, it is required to load the webpage and display the contents.

If the identification rules are met, the mobile browser obtains HTML codes of the webpage, and according to the contents extraction rule, extracts elements containing effective information from HTML codes of the webpage, and then extracts effective information from said elements.

Then, the mobile browser generates new webpages and displays the contents by inserting effective information of the webpages into a predefined framework webpages.

Hence, the technical scheme of the present disclosure is perfectly suited for the screen resolution of the equipment; it can also maintain information and interaction of original webpages to a greatest extent, meanwhile increasing the uploading speed and saving the network bandwidth.

## Description

### Field of the Invention

The present invention relates to the field of mobile internet, and more particularly to a method for redoing a webpage layout.

### Background Information

In the field of mobile internet, there is a common concern on how to present rich information of internet on mobile equipment in a user-friendly manner. Of which, it's very crucial to demonstrate how the webpages of traditional internet designed for high-resolution screens are displayed on low-resolution screens without compromising browsing and interaction of the original webpages.

At present, some efforts have been made on the currently available browsers of main mobile equipments, for example, in the IE Mobile browser of Windows Mobile OS, all elements in the webpages are arranged longitudinally for the users' convenience; in the browser of Google's Android, word wrap technology is adopted, namely, during webpage scaling, the paragraphs of texts in the webpages are reset, enabling word wrap according to current scaling ratio and the relationship with the screen. So, screen rolling operation on the webpages is not required when the users are browsing. In the browser of Apple's iPhone mobile phones and the browser of Microsoft Windows Phone 7 system, text scaling technology is adopted to adjust the font sizes in different containers of the webpages during the first web rendering. This could ensure that when the containers are scaled to the middle of the screen, the font size in the container is suitable for the access of the users without need of screen rolling, thus avoiding successfully redoing the webpage layout during every scaling operation.

However, the biggest shortcoming of such technologies lies in that, it only improves the reading experience of numerous webpage paragraphs of texts on the mobile equipment, but this makes no sense for other web elements such as: pictures and videos. Moreover, such technologies disturb partially the web layout, leading possibly to disorder of web layout, contents repetition or extensive blanking, etc.

Alternatively, a server resetting technology is introduced in the research; typically, a server cache acceleration technology developed by UCWEB enables resetting of the webpages via a server, such that the font and width of webpages occupy lower resolution of mobile equipments, and the connecting frequency with the website server could be reduced by caching the reset webpages.

Yet, given a variety of mobile equipments with different resolutions, the webpages reset at the server terminal are not optimized to be suited for the users' equipment screens.

As for some websites involving a users' privacy (e.g.: E-commerce website, on-line forums), the server resetting technology requires a client to only establish a connection with a resetting cache server, whereby the privacy contents of the users are stored in the resetting cache server, increasing the risk of privacy leakage.

Owing to the diversity of websites, the resetting results are difficult to guarantee the ease-of-use and aesthetics.

Also, the server resetting technology requires a huge amount of server resources and higher cost.

As the reset webpages are to be cached, the webpages requiring higher timeliness (e.g. live web casting) will be delayed in treatment, leading to loss of the real-time updating of websites.

### Summary of the Invention

The purpose of the present disclosure is to provide a method for redoing a webpage layout, which is perfectly suited for a screen resolution of an equipment for an extremely good browsing experience; it can also maintain the information and interaction of original webpages to a greatest extent, meanwhile unrelated elements in the webpages could be filtered out to increase the loading speed and save the network bandwidth. To this end, the present disclosure adopts the following technical scheme:
A method for redoing the webpage layout, including:
   A. Mobile browser obtains a web address;
   B. Mobile browser judges if the webpage correspondingly to the web address meets the identification rules, if this is the case Step C is applicable, if not it is required to load the webpage and display the contents of the webpage;
   C. Mobile browser obtains HTML codes of the webpage;
   D. Mobile browser, according to the contents extraction rule, extracts the elements containing effective information from the HTML codes of the webpage, and then extracts effective information from the elements;
   E. Mobile browser generates a new webpage by inserting the effective information of the webpage into the predefined framework webpage;
   F. Mobile browser loads the new webpage and displays the contents of the new webpage therein.

The identification rules can include: website rule, special element rule and web formatting rule, of which the website rule is realized by Regular Expression, which is a sequence of characters or elements that forms a search pattern, the special element rule is judging the compliance of existing webpages by looking for the compliant elements in the webpages, and the web formatting rule is judging the compliance according to the overall hierarchical structure of the webpage elements.

The special element rule can also be: judging if the ID of the element "Body" n the webpage is a special character. The "Body" element contains all the contents of an HTML document, such as text, hyperlinks, images, tables, lists, etc.. The web formatting rule can also be judging if the body of the webpage contains two div-elements. A div-element is a handy way to quickly add a picture, animation, form or any other item on one of your pages. Once added you can move the item around on the page easily.

The contents extraction rule can be realized by a XPath technology. XPath is a language that describes a way to locate and process items in Extensible Markup Language (XML) documents by using an addressing syntax based on a path through the document's logical structure or hierarchy.

The contents extraction rule can contain the extraction rules for news webpages, novel webpages and forum posts.

The effective information can contain internal HTML codes and hyperlink information.

Step E can also include the following steps:
The mobile browser inserts effective information of the webpages into a predefined framework webpages;

In the framework webpage, a layout format is presented to generate new webpages by the predefined CSS (cascading style sheets) in combination with characteristics of the mobile browser.

The characteristics of the mobile browser can contain resolution and display characteristics.

With the adoption of the technical scheme of the present disclosure, the following technical efficacies could be generated:
1. As only the webpage layout of webpages of the websites complying with specific rules are redone, this ensures that the webpages which are redone provide better browsing and interaction experience.
2. Through redoing the webpages layout many unrelated contents (e.g.: ads) in original websites can be filtered out, thus improving browsing experience and saving network traffic.
3. Concerning privacy involved for caching and redoing a webpage layout by a server, a complete client redoing is introduced such that all data interaction only occurs at the client and website server, protecting the user privacy without adding the intervention of any third party's server.
4. Redoing the layout of webpages which are returned by a website server in real-time ensures that the contents of the webpages presented in the user equipment are real-time contents of the website.

### Brief Description of the Drawing

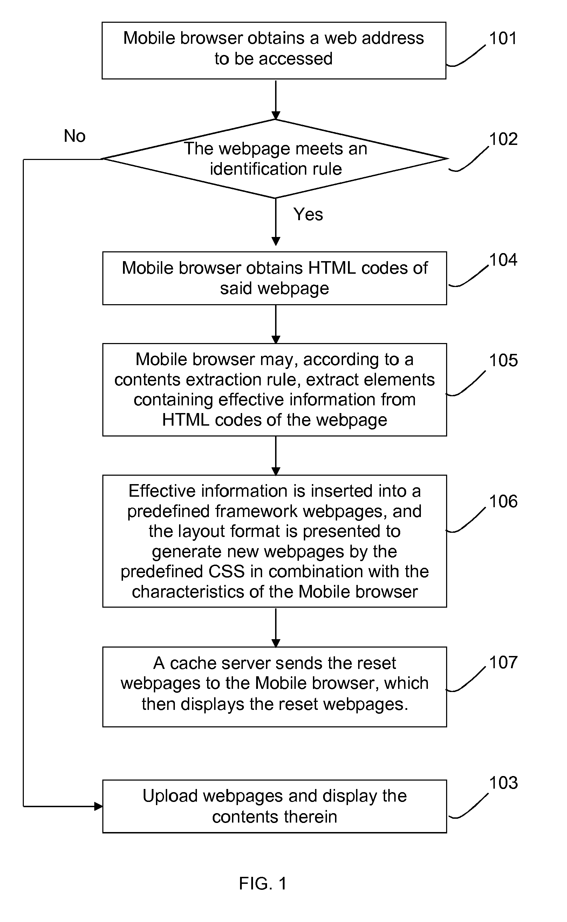

FIG 1 is a flow chart of a method for redoing the webpage layout in the preferred embodiment of the present disclosure.

### Detailed Description of the preferred embodiment

The preferred embodiment of the technical scheme of the present disclosure is further described with reference to the accompanying drawings.

Figure 1 is a flow process chart of a redoing of a webpage layout in a preferred embodiment of the present disclosure. Referring to FIG. 1, the redoing process contains the following steps:
- Step 101:: A mobile browser obtains the web address to be accessed.
- Step 102:: The mobile browser judges if the webpage correspondingly to the web address meets identification rules, if this is the case, Step 104 is applicable, if not Step 103 is to be applied.

The identification rules are stored in the client of the Mobile browser, including: website rule, special element rule and web formatting rule.

The website rule is realized by Regular Expression.

The special element rule is judging the compliance of existing webpages by looking for compliant elements in the webpages, for instance, judging if the ID of an element "Body" in the webpage is a special character.

The web formatting rule is judging the compliance according to the overall hierarchical structure of the webpage elements, for instance, judging if a body of the webpage contains two div-elements.
- Step 103:: Loading the webpages and displaying the contents of the webpage.
- Step 104:: Mobile browser obtains HTML codes of the webpage.
- Step 105:: The mobile browser may, according to the contents extraction rule, extracts elements containing effective information from HTML codes of the webpage, and then extracts effective information from the elements; the effective information contains internal HTML codes and hyperlink information.

The contents extraction rules are stored in the client of the mobile browser, containing: the extraction rules for news webpages, novel webpages and forum posts. So, different rules shall be defined for various types of webpages. What the contents extraction rule describes refers to a set of certain HTML elements or a group of HTML elements, which shall be realized by the XPath technology.
- Step 106:: The mobile browser inserts effective information of the webpages into a predefined framework webpage; in the framework webpage, the layout format is presented to generate a new webpage by the predefined CSS (cascading style sheets) in combination with characteristics of the Mobile browser. The characteristics of the mobile browser contain resolution and display characteristics.
- Step 107:: The mobile browser loads the new webpage and displays the contents of the new webpages therein. For various types of webpages, the framework webpages and patterns contained therein may differ from each other; for the same type of webpages, the same framework webpage and patterns are adopted for consistency of the webpages which are redone.

The above is a detailed description of the technical features of the present disclosure based on a typical preferred embodiment. However, it should be appreciated that the present disclosure is capable of a variety of embodiments and various modifications by those skilled in the art, and all such variations or changes shall be embraced within the scope of the following claims.

## Claims

1. A method for redoing a webpage layout, comprising:
A. obtaining a web address by a mobile browser;
B. judging if a webpage corresponding to the web address meets identification rules of a mobile browser, if this is the case, Step C is to be applied, otherwise, it is required to load the webpage and display the contents of the webpage;
C. obtaining HTML codes of the webpage by the mobile browser;
D., extracting elements containing effective information from the HTML codes of the webpage according to contents extraction rule by the mobile browser, and then extracting effective information from said elements;
E. generating a new webpage by inserting effective information of the webpage into the predefined framework webpage by the mobile browser;
F. loading the webpage and displaying the contents therein by the mobile browser.

2. The method of Claim 1, wherein the identification rules include: website rule, special element rule and web formatting rule, of which the website rule is realized by Regular Expression, wherein the special element rule means judging the compliance of existing webpages by looking for compliant elements in the webpages, and wherein the web formatting rule means judging the compliance according to the overall hierarchical structure of the webpage elements.

3. The method of Claim 2, wherein the special element rule also contains judging if the ID of the element "Body" in the webpage is a special character; the web formatting rule also contains judging if the body of the webpage contains two divelements.

4. The method of any of the aforementioned claims, wherein the contents extraction rule is realized by a XPath technology.

5. The method of claim 4, wherein the contents extraction rule contains the extraction rules for news webpages, novel webpages and forum posts.

6. The method of any of the aforementioned claims, wherein the effective information contains internal HTML codes and hyperlink information.

7. The method of any of the aforementioned claims, wherein step E further includes the following steps:
inserting effective information of the webpages into the predefined framework webpages by a mobile browser, such that in the framework webpage, the layout format is presented to generate new webpages by the predefined CSS (cascading style sheets) in combination with characteristics of the mobile browser.

8. The method of claim 7, wherein the characteristics of the mobile browser contains resolution and display characteristics.
